# EUROPEAN PATENT SPECIFICATION

(11) **EP 1 722 530 B1**
(45) Date of publication and mention of the grant of the patent: **27.04.2011**
(21) Application number: 04802472.3
(22) Date of filing: 16.12.2004
(51) Int. Cl.: H04L 29/06

(54) **A method for realizing the individual traffic customization on the session initiation**
Verfahren zur Realisierung der individuellen Verkehrsanpassung bei der Sitzungseinleitung
Procédé pour réaliser la personnalisation du trafic sur le serveur d'application sip du protocole de démarrage de session

(30) Priority: 27.02.2004 CN 200410005792
(43) Date of publication of application: 15.11.2006
(73) Proprietor: Huawei Technologies Co., Ltd., Shenzhen, Guangdong Province 518129 (CN)
(72) Inventor: ZHANG, Liming, Huawei Administration Building, Shenzhen, Guang Dong 518129 (CN)
(74) Representative: Thun, Clemens
(86) International application number: PCT/CN2004/001459
(87) International publication number: WO 2005/083966

(56) References cited:
- EP-A2- 1 244 261
- WO-A-02/19749
- CN-A- 1 307 775
- CN-A- 1 417 989
- US-A- 5 928 323
- US-A1- 2002 120 691
- US-A1- 2003 174 693
- SIP WG MICK O'DOHERTY NORTEL NETWORKS SIP SERVLET DELIVERY: "SIP Servlet Delivery" IETF STANDARD-WORKING-DRAFT, INTERNET ENGINEERING TASK FORCE, IETF, CH, July 2000 (2000-07), XP015033351 ISSN: 0000-0004
- FTW K PETERBAUER (KAPSCH AG) J STADLER ET AL: "SIP Servlet API Extensions" IETF STANDARD-WORKING-DRAFT, INTERNET ENGINEERING TASK FORCE, IETF, CH, 14 February 2001 (2001-02-14), XP015033886 ISSN: 0000-0004
- KRISTENSEN A. ET AL: "The SIP Servlet API; draft-kristensen-sip-servlet-00.txt", IETF STANDARD-WORKING-DRAFT, 1 September 1999 (1999-09-01), XP015031225, INTERNET ENGINEERING TASK FORCE, IETF, CH

## Description

### Technical Field

The present invention relates to Session Initiation Protocol (SIP) application technology, and more specifically to a method for implementing service customization on SIP Application Server (AS).

### Invention Background

SIP is an IP phone signaling protocol proposed by the Internet Engineering Task Force (IETF), and is applied in the IP network signaling control and communication with soft switch, so as to constitute the next generation value-added business platform and provide better value-added services for telecommunication, banking and financial businesses.

Because of its advantages of easy to understand, extend and implement, SIP has gradually turned into an important protocol of the multimedia subsystem in Next Generation Network (NGN) and the 3^{rd} Generation (3G) Network. At present, more and more SIP-supported client software and intelligent multimedia terminals as well as SIP-based servers and soft switch devices are emerging.

SIP services refer to SIP-based applications, e.g. Voice over Internet Protocol (VoIP), presence service, Instant Message (IM) service.

SIP AS is a functional entity adapted for controlling and executing self-stored SIP services. It is the most important part in communication networks that adopt SIP as multimedia session control protocol. SIP AS faces the whole IP network, and seamlessly integrates the technologies of voice, data, video, massage and WEB to meet all demands of Internet and mobile communication.

In the times of NGN and 3G, development of SIP service is divided into three phases: the first phase is characterized by Voice over Packet (VoP) and simple multimedia services; the second phase is characterized by plenty of multimedia services guaranteed by Quality of Services (QoS); the third phase is characterized by customized and virtualized services. In the third phase, the third party service providers will provide plenty of services to networks, and the customized and virtualized services present a trend of booming growth, therefore, the customized service will occupy an important position in NGN and 3G.

So, it is a great issue in SIP applications that how to implement service customization on SIP AS. The following is the technical solution to implementation of customized services in prior art.

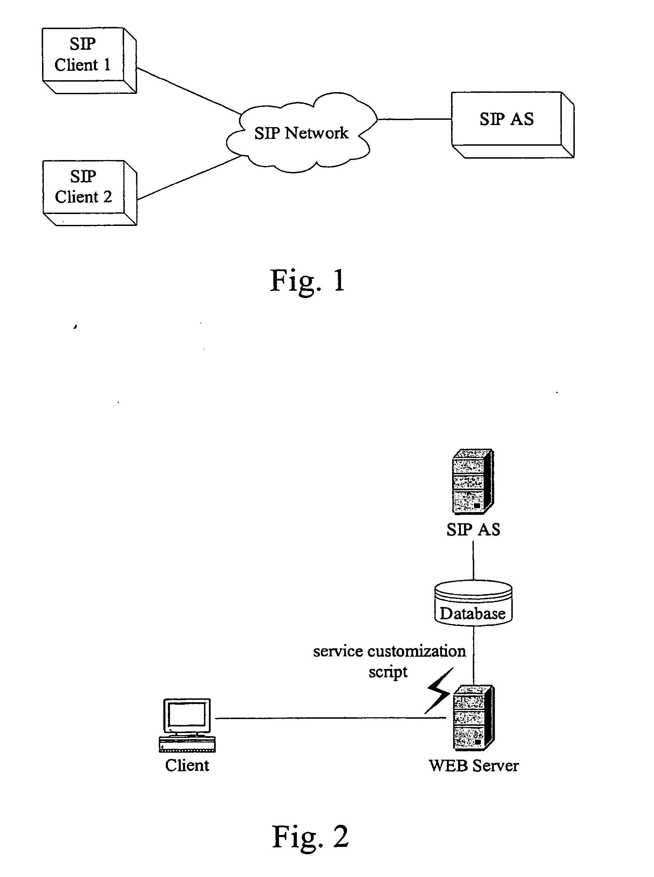

Fig. 1 illustrates a location of a SIP AS in a SIP network. As shown in this figure, a SIP client is connected with a SIP AS via the SIP network.

The SIP client is client software or equipment that supports SIP applications, e.g. SIP-based multimedia PC soft terminal, SIP-based mobile phone, SIP-based multimedia WEB client software, and SIP-based Personal Digital Assistant (PDA) client software.

In some specific application environments, SIP network includes multiple network nodes. For example, in 3GPP R5 service environment, the network nodes that a typical SIP network might comprise are proxy servers, redirect servers, registrar/location servers, Serving Call Session Control Function (SCSCF) and SIP AS. The SIP request from the SIP client is sent to the SIP AS via the above network nodes.

The technical solution to implement service customization in prior art is to set up a subsystem that is logically independent from the SIP AS. The subsystem mainly comprises a WEB AS and a database. The WEB AS functions to collect users' customized information and store the customized information in the database. Therefore, when a user uses a certain service once again, the SIP AS will perform corresponding configuration according to the customized information in the database, so that the user gets his customized service experience.

Fig. 2 is a system construction illustrating the service customization in prior art. As shown in this figure, a WEB server and a database are logically independent from a SIP AS. The client with which the user carries out service customization is generally a PC. The service customization script is generated at the WEB AS.

Fig. 3 is a flow illustrating the method for implementing service customization in prior art. As shown in this figure, the method for implementing service customization comprises:
Step 301: The WEB server provides options of service customization for the client.
Step 302: The client sets up the service customization according to the options from the WEB server.
Step 303: The client sends the service customization information to the WEB server.
Step 304: The WEB server generates the service customization script.
Step 305: The WEB server stores the service customization script into the database.

When the user requests a service once again, the SIP AS accesses the database and obtains the user's service customization information and carries out corresponding configuration, so as to achieve the object of customization demanded by the user.

However, the technical solution in prior art is complicated to implement, and should rely on a WEB AS to realize service customization. Further, the service customization configuration won't go into effect until a user uses the service once again. It is difficult for users to realize uploading and configuration of a whole customized SIP service.

Document SIP WG MICK O'DOHERTY NORTEL NETWORKS SIP SERVLET DELIVERY:"SIP Servlet Delivery" IETF relates to an extension to the SIP protocol. This document discloses a method for distributing SIP Servlets to SIP clients by using SIP messages. US 5928323A relates to an improved technique for responding to information requests at a server computer. WO 02/19749A proposes a method for transmitting subscriber information from a first network element to a second network element.

### Summary of the invention

The present invention provides a method for implementing service customization on SIP AS, by which realizes service customization through SIP AS without the aid of WEB server.

The scheme of the present invention is as follows:
The method for implementing service customization on Session Initiation Protocol (SIP) Application Server (AS) comprises:
   generating, at a SIP client, a service customization script which is a logical expression of a user's customized configuration of a service;
   sending, by the SIP client, a service customization request containing the service customization script to the SIP AS;
   upon receiving the service customization request, the SIP AS extracting the service customization script from the service customization request, and determining whether the user is using the service;
   if the user is using the service, the SIP AS combining the service customization script and a service script of the service and providing the service to the SIP client; and if the user is not using the service, the SIP AS storing the service customization script.

The method further comprises:
storing service subscription information in the SIP AS;
upon receiving the service customization request, the SIP AS determining whether the user has subscribed to the service corresponding to the service customization request by inquiring the stored service subscription information, and if yes, extracting the service customization script from the service customization request.

Wherein, the service customization script is a SIP script of call processing language type, a universal gateway interface type or a SIP servlet type.

Wherein, the service customization script is a configuration file.

The method further comprises:
setting a database that stores the service customization script at the SIP AS;
the step of storing service customization script comprises: storing the service customization script in the database.

From the above mentioned technical solution, a user can generate his service customization script at a SIP client, and send his service customization request message carrying the script to a SIP AS via the SIP client. The SIP AS extracts the service customization script from the request message and stores the script.

In the present invention, the SIP AS decides whether the user uses the service after it extracts the service customization script from the service customization request message, if so, it immediately applies the service customization script to the service.

By using the method of the present invention, the network supplier can provide more convenient and high effective service customization service.

### Brief description of the drawings

Fig. 1 is a schematic diagram illustrating location of SIP AS in SIP application.
Fig. 2 is a schematic diagram illustrating the system construction of technical solution to implement service customization in prior art.

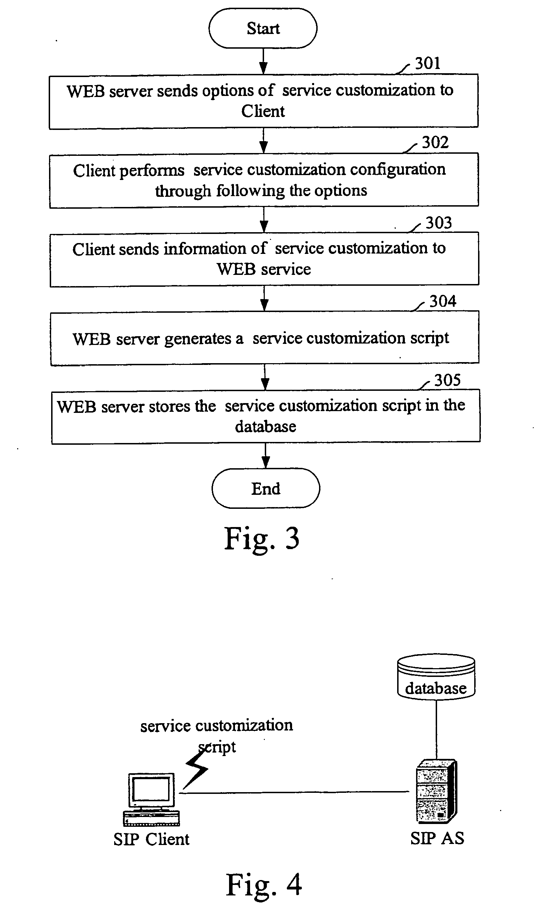

Fig. 3 is a flow illustrating the technical solution to implement service customization in the prior art.
Fig. 4 is a schematic diagram illustrating the system construction of the solution to implementing service customization in accordance with an embodiment of the present invention.

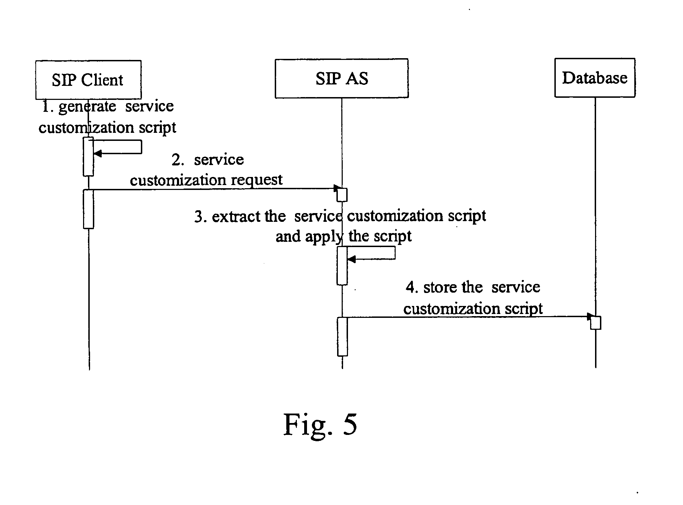

Fig. 5 is a schematic diagram illustrating the solution to implement service customization in accordance with an embodiment of the present invention.

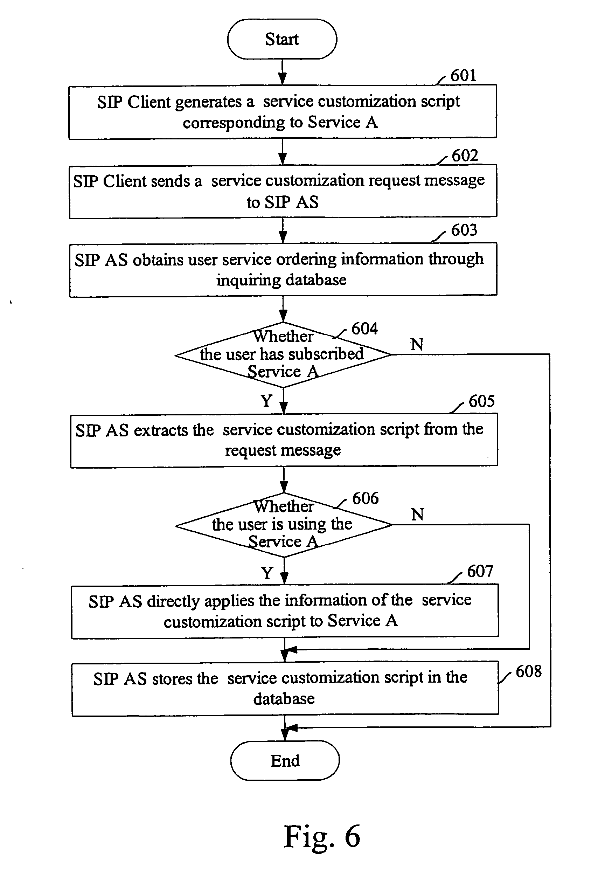

Fig. 6 is a flow illustrating the technical solution to implement service customization in SIP AS in accordance with an embodiment of the present invention.

### Detailed description of preferred embodiments

In order to make the solution and merits of the present invention clearer, a detailed description of the present invention is hereinafter given with reference to specific embodiments and the accompanying drawings.

Fig. 4 is a schematic diagram illustrating the system construction of the solution to implement service customization in accordance with an embodiment of the present invention. As shown in this figure, the logical functional entities in the system include a SIP client, a SIP AS and a database.

The SIP client is adapted for generating and submitting service customization script, which is a logical expression of a user's customized configuration of a SIP service. If the SIP service is configurable, the user can do the configuration of the SIP service according to his interests, and the configuration information is stored in a script, and this script is the service customization script corresponding to the customized service configuration. The user can do the configuration at the SIP client according to the instructions issued by the SIP AS to generate his service customization script. The user can also generate a complete service customization script by himself, for instance, a Call Processing Language (CPL) script which implements call forwarding.

The SIP AS processes various SIP service requests. The SIP AS should be configured with a special SIP service apart from its common services to implement customization, and the special service is called customization service. Unlike the common SIP services, the customization service dedicates to processing SIP service customization request messages from SIP clients, i.e., this service specially serves to achieve SIP service customization function, and serves for operation to create, store, inquire, delete and replace users' service customization scripts. When a SIP client requests service customized, the SIP AS executes the customization service.

The database serves to store the service customization scripts and users' service subscription information.

In the embodiment of the invention, the customization service in the SIP AS is used to process the service customization request messages. When a SIP client sends a service customization request message to the SIP AS, the SIP AS executes the customization service.

Fig. 5 is a schematic diagram illustrating the solution to implement service customization in accordance with an embodiment of the present invention. This figure shows the logical sequence of operations on a SIP client, a SIP AS and a database, and information transferred among above-mentioned three entities. The SIP client generates a service customization script and sends to the SIP AS a service customization request message carrying the generated service customization script. The SIP AS extracts the service customization script from the service customization request message, and stores the service customization script in the database.

Fig. 6 is a flow illustrating the method for implementing service customization in accordance with an embodiment of the present invention. In this embodiment, the user needs to perform customized configuration of a SIP service, and the SIP service in this embodiment is called Service A. As shown in this figure, the implementation of the customized service mainly comprises the following steps:

Step 601: Generating a service customization script for Service A at the SIP client.

The script can be generated in many ways, for instance, the user can generate the script at the SIP client following the guide and prompts of the SIP AS, or generate a script by programming. The script can be any of the general types of service scripts, e.g. Call Processing Language (CPL) script, Common Gateway Interface (CGI) script, SIP Servlet script, or a script of configuration file.

Step 602: The SIP client initiates the service customization service, sends to the SIP AS a service customization request message carrying the service customization script generated in Step 601.

Step 603: The SIP AS inquires the database to obtain the user's service subscription information upon receiving the service customization request message.

Step 604: The SIP AS decides whether the user has subscribed to Service A, if so, proceeds to Step 605; otherwise, ends the current procedure.

Step 605: The SIP AS extracts the service customization script from the service customization request message.

Step 606: The SIP AS decides whether the user is currently using Service A, if so, proceeds to Step 607; otherwise, proceeds to Step 608.

Step 607: The SIP AS applies contents of the service customization script to Service A, i.e., combines the service customization script and service script of Service A, so that the user can immediately use Service A with customized configuration.

Step 608: The SIP AS stores the service customization script in the database.

Steps 603∼608 are the service flow of customization service in SIP AS.

When the user requests to use Service A again, the SIP AS decides whether the user has made customized configuration for Service A by inquiring the database, if the user has already made customized configuration for Service A, the SIP AS fetches the service customization script from the database and applies the script to Service A; otherwise, the SIP AS directly executes Service A.

As shown in the flow of Figure 6, the customization service needs to decide whether the user is using Service A after the customization service extracts the service customization script, and if the user is using Service A, it immediately applies the service customization script to Service A; otherwise, it directly stores the service customization script in the database. Therefore, the user's service customization can be applied immediately to the service with customized configuration instead of going into effect until the user uses the service next time.

The method of the present invention can be modified appropriately in specific embodiment process to meet the specific requirements of specific cases. It is thereby understood that the specific embodiments according to the present invention are just demonstrative and are not incline to limit the protection scope thereof.

## Claims

1. A method for implementing service customization on Session Initiation Protocol, SIP, Application Server, AS, **characterized by** comprising:
generating, at a SIP client, a service customization script which is a logical expression of a user's customized configuration of a SIP service;
sending, by the SIP client, a service customization request containing the service customization script to the SIP AS;
upon receiving the service customization request, the SIP AS extracting the service customization script from the service customization request, and determining whether the user is using the SIP service;
if the user is using the SIP service, the SIP AS combining the service customization script and a service script of the SIP service and providing the SIP serviee to the SIP client; and if the user is not using the SIP service, the SIP AS storing the service customization script.

2. The method according to Claim 1, further comprising:
storing service subscription information in the SIP AS;
upon receiving the service customization request, the SIP AS determining whether the user has subscribed to the SIP service corresponding to the service customization request by inquiring the stored service subscription information, and if yes, extracting the service customization script from the service customization request.

3. The method according to Claim 1, wherein the service customization script is a SIP script of call processing language type, a universal gateway interface type or a SIP servlet type.

4. The method according to Claim 1, wherein the service customization script is a configuration file.

5. The method according to Claim 1, further comprising:
setting a database that stores the service customization script at the SIP AS;
the step of storing service customization script comprises: storing the service customization script in the database.

## Patentansprüche

1. Verfahren zum Implementieren von Dienstanpassung auf dem Application Server AS des Session Initiation Protocol SIP, **gekennzeichnet durch** die folgenden Schritte:
Erzeugen eines Dienstanpassungsskripts in einem SIP-Client, das ein logischer Ausdruck der angepassten Konfiguration eines Benutzers eines SIP-Dienstes ist;
Senden einer Dienstanpassungsanforderung **durch** den SIP-Client, die das Dienstanpassungsskript enthält, zu dem SIP AS;
beim Empfang der Dienstanpassungsanforderung extrahiert der SIP AS das Dienstanpassungsskript aus der Dienstanpassungsanforderung und bestimmt, ob der Benutzer den SIP-Dienst benutzt;
wenn der Benutzer den SIP-Dienst benutzt, kombiniert der SIP AS das Dienstanpassungsskript und ein Dienstskript des SIP-Dienstes und stellt den SIP-Dienst dem SIP-Client bereit; und wenn der Benutzer den SIP-Dienst nicht benutzt, speichert der SIP AS das Dienstanpassungsskript.

2. Verfahren nach Anspruch 1, ferner mit den folgenden Schritten:
Speichern von Dienstsubskriptionsinformationen in dem SIP AS;
beim Empfang der Dienstanpassungsanforderung bestimmt der SIP AS, ob der Benutzer den SIP-Dienst, der der Dienstanpassungsanforderung entspricht, subskribiert hat, indem er die gespeicherten Dienstsubskriptionsinformationen abfragt, und extrahiert, wenn dem so ist, das Dienstanpassungsskript aus der Dienstanpassungsanforderung.

3. Verfahren nach Anspruch 1, wobei das Dienstanpassungsskript ein SIP-Skript des Typs der Anrufverarbeitungssprache, des Typs einer universellen Gateway-Schnittstelle oder des Typs eines SIP-Servlet ist.

4. Verfahren nach Anspruch 1, wobei das Dienstanpassungsskript eine Konfigurationsdatei ist.

5. Verfahren nach Anspruch 1, ferner mit dem folgenden Schritt:
Setzen einer Datenbank, die das Dienstanpassungsskript speichert, in dem SIP AS;
wobei der Schritt des Speicherns des Dienstanpassungsskripts Folgendes umfasst: Speichern des Dienstanpassungsskripts in der Datenbank.

## Revendications

1. Procédé de mise en oeuvre d'une personnalisation de service sur un serveur d'applications AS de protocole d'ouverture de session SIP, **caractérisé en ce qu'**il comprend les étapes de :
génération, au niveau d'un client SIP, d'un script de personnalisation de service constituant une expression logique d'une configuration personnalisée d'un service SIP d'un utilisateur ;
transmission, par le client SIP, d'une demande de personnalisation de service contenant le script de personnalisation de service à l'AS SIP ;
dès réception de la demande de personnalisation de service, extraction par l'AS SIP du script de personnalisation de service de la demande de personnalisation de service, et vérification par l'AS SIP si l'utilisateur utilise le service SIP ;
si l'utilisateur utilise le service SIP, combinaison par l'AS SIP du script de personnalisation de service et d'un script de service du service SIP, et prestation par l'AS SIP du service SIP au client SIP ; et si l'utilisateur n'utilise pas le service SIP, mémorisation par l'AS SIP du script de personnalisation de service.

2. Procédé selon la revendication 1, comprenant en outre les étapes suivantes :
mémorisation d'informations d'abonnement à des services dans l'AS SIP ;
dès réception de la demande de personnalisation de service, vérification par l'AS SIP si l'utilisateur s'est abonné au service SIP correspondant à la demande de personnalisation de service par consultation des informations d'abonnement à des services mémorisées et, si c'est le cas, extraction par l'AS SIP du script de personnalisation de service de la demande de personnalisation de service.

3. Procédé selon la revendication 1, le script de personnalisation de service étant un script SIP de type langage de traitement d'appel, de type interface de passerelle universelle ou de type servlet SIP.

4. Procédé selon la revendication 1, le script de personnalisation de service étant un fichier de configuration.

5. Procédé selon la revendication 1, comprenant en outre l'étape suivante :
établissement d'une base de données qui mémorise le script de personnalisation de service au niveau de l'AS SIP ; et
l'étape de mémorisation du script de personnalisation de service comprenant l'étape de mémorisation du script de personnalisation de service dans la base de données.
